(19) Europäisches Patentamt / European Patent Office / Office européen des brevets

(11) **EP 3 795 249 A1**

(12) **EUROPEAN PATENT APPLICATION**
published in accordance with Art. 153(4) EPC

(43) Date of publication:
**24.03.2021 Bulletin 2021/12**

(51) Int Cl.:
**B01J 35/04** (2006.01)  **B01D 39/14** (2006.01)
**B01D 53/94** (2006.01)  **B01J 23/63** (2006.01)
**B01J 37/02** (2006.01)  **F01N 3/022** (2006.01)
**F01N 3/035** (2006.01)  **F01N 3/28** (2006.01)

(21) Application number: **19804450.5**

(22) Date of filing: **16.05.2019**

(86) International application number:
**PCT/JP2019/019429**

(87) International publication number:
**WO 2019/221212 (21.11.2019 Gazette 2019/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2018 JP 2018095514**

(71) Applicant: **N.E. Chemcat Corporation**
**Tokyo 105-6124 (JP)**

(72) Inventors:
- **MOCHIZUKI, Hiroshi**
  **Tokyo 105-6124 (JP)**
- **TAKAYAMA, Akito**
  **Tokyo 105-6124 (JP)**
- **FUJIMURA, Takehiro**
  **Tokyo 105-6124 (JP)**

(74) Representative: **TBK**
**Bavariaring 4-6**
**80336 München (DE)**

(54) **EXHAUST GAS PURIFICATION CATALYST AND METHOD FOR PRODUCING SAME**

(57)    An exhaust gas purifying catalyst for purifying exhaust gas discharged from an internal combustion engine includes: a wall flow type substrate in which an inflow-side cell having an open at an exhaust gas inflow-side end, and an outflow-side cell adjacent to the inflow-side cell and having an open at an exhaust gas outflow-side end are separated by a porous partition wall; a first catalyst layer formed on at least a part of a surface of pores in the partition wall and containing a catalytic metal; and a second catalyst layer formed on at least a part of the first catalyst layer and containing a catalytic metal different from the catalytic metal contained in the first catalyst layer.

FIG. 1

**Description**

Technical Field

The present invention relates to an exhaust gas purifying catalyst and a method for producing the same.

Background Art

A particulate material (PM) mainly containing carbon, and ash composed of incombustible components, and the like are contained in exhaust gas discharged from an internal combustion engine. The exhaust gas is known to cause air pollution. In a diesel engine relatively readily discharging a particulate material as compared with a gasoline engine, the amount of the particulate material discharged has been severely regulated. In recent years, also in the gasoline engine, the regulation of the amount of the particulate material discharged has been tightened.

A method in which a particulate filter is provided on an exhaust gas passage of an internal combustion engine in order to deposit and collect a particulate material has been known as means for reducing the amount of the particulate material discharged. In particular, in recent years, from the viewpoint of the space saving of a mounting space, and the like, in order to simultaneously achieve the suppression of the emission of the particulate material and the removal of harmful components such as carbon monoxide (CO), hydrocarbon (HC), and nitrogen oxide ($NO_x$), a catalyst slurry is considered to be coated on the particulate filter, followed by firing, to provide a catalyst layer.

However, if the catalyst layer is provided in the particulate filter in which pressure loss is readily increased by the deposition of the particulate material from the beginning, the exhaust gas passage is narrower. This readily causes further increased pressure loss, which disadvantageously causes reduction in engine output. In order to solve such a problem, for example, Patent Literatures 1 to 3 propose that the types of catalyst layers and positions at which the catalyst layers are provided are devised for the purpose of suppression of an increase in pressure loss and improvement in exhaust gas purifying performance.

Citation List

Patent Literature

Patent Literature 1: WO2016/060048
Patent Literature 2: WO2016/060049
Patent Literature 3: WO2016/060050

Summary of Invention

Technical Problem

Specifically, Patent Literature 1 discloses that higher purification performance is obtained when a catalyst layer is formed in a concentrated manner on a partition wall portion close to an exhaust gas inflow-side end and on a partition wall portion close to an exhaust gas outflow-side end, as compared to the broad formation of the catalyst layer over the entire partition wall. Patent Literature 2 discloses that a first catalyst layer is formed in a partition wall, and a second catalyst layer is formed on a partition wall surface brought into contact with an outflow-side cell, to allow purification performance to be maintained or improved. Furthermore, Patent Literature 3 discloses that an upstream coat region is provided in a partition wall, and a downstream coat region is formed on a surface portion of a partition wall brought into contact with an outflow-side cell, to allow purification performance to be maintained or improved.

Thus, various studies have been made for separately forming the catalyst layers at predetermined positions in the partition wall or on the surface of the partition wall (outside the partition wall) (hereinafter, referred to as "in-wall separable catalyst layer") to achieve the suppression of the increase in pressure loss and the improvement in the exhaust gas purifying performance. However, it has not been sufficiently examined whether or not the suppression of the increase in the pressure loss and further improvement in the exhaust gas purifying performance can be achieved by forming a plurality of catalyst layers containing different catalytic metal species in the same pore of the partition wall.

The present invention has been made in view of the foregoing problems, and an object of the present invention is to provide an exhaust gas purifying catalyst which suppresses an increase in pressure loss and has improved exhaust gas purifying performance, particularly NOx removal rate, and a method for producing the same. The exhibition of operations and effects which are derived from each configuration shown in the Description of Embodiments to be described later, and are not obtained by a conventional technique without being limited to the object here can also be positioned as another object of the present invention.

Solution to Problem

The present inventors conducted continuous and intensive studies in order to solve the above-described problems. As a result, room for providing further improved exhaust gas purifying performance and suppressing an increase in pressure loss has been found to be provided by stacking and forming a plurality of catalyst layers containing different catalytic metal species in the same pore of a partition wall. The present invention is based on the findings. That is, the present invention provides various specific aspects to be described later.

[1] An exhaust gas purifying catalyst for purifying exhaust gas discharged from an internal combustion engine including:

a wall flow type substrate in which an inflow-side cell having an open at an exhaust gas inflow-side end, and an outflow-side cell adjacent to the inflow-side cell and having an open at an exhaust gas outflow-side end are separated by a porous partition wall;
a first catalyst layer formed on at least a part of a surface of pores in the partition wall and containing a catalytic metal; and
a second catalyst layer formed on at least a part of the first catalyst layer and containing a catalytic metal different from the catalytic metal contained in the first catalyst layer.

[2] The exhaust gas purifying catalyst according to [1], wherein the exhaust gas purifying catalyst has a stacked structure where the first catalyst layer and the second catalyst layer are stacked over the entire surface of the pores in the partition wall.

[3] The exhaust gas purifying catalyst according to [1] or [2], wherein the second catalyst layer contains Pd as the catalytic metal.

[4] The exhaust gas purifying catalyst according to any one of [1] to [3], wherein the first catalyst layer contains Rh as the catalytic metal.

[5] The exhaust gas purifying catalyst according to any one of [1] to [4], wherein the internal combustion engine is a gasoline engine.

[6] A method for producing an exhaust gas purifying catalyst for purifying exhaust gas discharged from an internal combustion engine, the method including:

a step of preparing a wall flow type substrate in which an inflow-side cell having an open at an exhaust gas inflow-side end, and an outflow-side cell adjacent to the inflow-side cell and having an open at an exhaust gas outflow-side end are separated by a porous partition wall;
a first catalyst layer forming step of coating a first catalyst slurry containing a catalytic metal on at least a part of a surface of pores in the partition wall of the wall flow type substrate to form a first catalyst layer; and
a second catalyst layer forming step of coating a second catalyst slurry containing a catalytic metal different from the catalytic metal contained in the first catalyst layer on at least a part of a surface of the first catalyst layer to form a second catalyst layer.

[7] The method for producing an exhaust gas purifying catalyst according to [6], wherein:

the first catalyst slurry is supplied into the wall flow type substrate from the exhaust gas inflow-side end in the first catalyst layer forming step; and
the second catalyst slurry is supplied into the wall flow type substrate from the exhaust gas inflow-side end in the second catalyst layer forming step.

[8] The method for producing an exhaust gas purifying catalyst according to [6], wherein:

the first catalyst slurry is supplied into the wall flow type substrate from the exhaust gas outflow-side end in the first catalyst layer forming step; and
the second catalyst slurry is supplied into the wall flow type substrate from the exhaust gas outflow-side end in the second catalyst layer forming step.

[9] The method for producing an exhaust gas purifying catalyst according to [6], wherein:

the first catalyst slurry is supplied into the wall flow type substrate from the exhaust gas inflow-side end in the first catalyst layer forming step; and
the second catalyst slurry is supplied into the wall flow type substrate from the exhaust gas outflow-side end in the second catalyst layer forming step.

[10] The method for producing an exhaust gas purifying catalyst according to [6], wherein:

the first catalyst slurry is supplied into the wall flow type substrate from the exhaust gas outflow-side end in the first catalyst layer forming step; and
the second catalyst slurry is supplied into the wall flow type substrate from the exhaust gas inflow-side end in the second catalyst layer forming step.

[11] The method for producing an exhaust gas purifying catalyst according to any one of [6] to [10], wherein the second catalyst slurry contains Pd as the catalytic metal.
[12] The method for producing an exhaust gas purifying catalyst according to any one of [6] to [11], wherein the first catalyst slurry contains Rh as the catalytic metal.

Advantageous Effects of Invention

The present invention can provide an exhaust gas purifying catalyst which suppresses an increase in pressure loss and provides improved exhaust gas purifying performance, particularly NOx removal rate, and a method for producing the same. The exhaust gas purifying catalyst can be utilized in not only a gasoline particulate filter (GPF) but also other particulate filter such as a diesel particulate filter (DPF), as means for suppressing an increase in pressure loss of a particulate filter supporting a catalyst, to achieve further improved performance of an exhaust gas treatment system mounted with such a particulate filter.

Brief Description of Drawings

[Figure 1] Figure 1 shows a cross-sectional view schematically showing one aspect of an exhaust gas purifying catalyst of the present embodiment.
[Figure 2] Figure 2 shows a cross-sectional view schematically showing another aspect of the exhaust gas purifying catalyst of the present embodiment.
[Figure 3] Figure 3 shows a process diagram schematically showing a method for producing an exhaust gas purifying catalyst of the present embodiment.
[Figure 4] Figure 4 shows a cross-sectional view of an exhaust gas purifying catalyst of Comparative Example 1.
[Figure 5] Figure 5 shows a graph showing the measurement results of pressure loss in exhaust gas purifying catalysts produced in Example and Comparative Examples.
[Figure 6] Figure 6 shows an EPMA observation image of a pore part of the exhaust gas purifying catalyst of Example.
[Figure 7] Figure 7 shows a graph showing the NOx removal rates of Example and Comparative Examples.

Description of Embodiments

Hereinafter, an embodiment of the present invention will be described in detail. The following embodiment is one example (representative example) of the embodiment of the present invention, and the present invention is not limited thereto. Modifications of the present invention may be arbitrarily made without departing from the scope thereof. Herein, positional relationships such as upper, lower, left, and right are based on those shown in the drawings unless otherwise specified. The dimensional ratio of the drawings is not limited to the ratio of illustration. Herein, a "D50 particle size" refers to a particle size when an accumulated value from a small particle size reaches 50% of the total in a volume-based particle size cumulative distribution. A "D90 particle size" refers to a particle size when an accumulated value from a small particle size reaches 90% of the total in a volume-based particle size cumulative distribution. Herein, in the case of the expression with "to" sandwiched between numerical values or physical property values before and after "to", "to" is used to include the values before and after "to". For example, the description of the numerical value range "1 to 100" includes both the upper limit value "100" and the lower limit value "1". The same applies to the description of other numerical value ranges.

[Exhaust Gas Purifying Catalyst]

An exhaust gas purifying catalyst of the present embodiment is an exhaust gas purifying catalyst 100 for purifying exhaust gas discharged from an internal combustion engine. The exhaust gas purifying catalyst 100 includes: a wall flow type substrate 10 in which an inflow-side cell 11 having an open at an exhaust gas inflow-side end 11a, and an outflow-side cell 12 adjacent to the inflow-side cell 11 and having an open at an exhaust gas outflow-side end 12a are separated by a porous partition wall 13; a first catalyst layer 21 formed on at least a part of a surface of pores 14 in the partition wall 13; and a second catalyst layer 31 formed on at least a part of the first catalyst layer 21. A catalytic metal contained in the first catalyst layer 21 and a catalytic metal contained in the second catalyst layer 31 are different from each other.

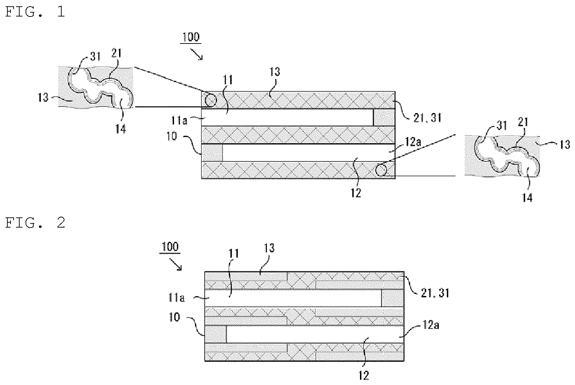

Hereinafter, each constitution will be described with reference to a cross-sectional view showing schematically the exhaust gas purifying catalyst of the present embodiment shown in Figure 1 and 2. The exhaust gas purifying catalyst of the present embodiment has a wall flow structure. In the exhaust gas purifying catalyst 100 having such a structure, the exhaust gas discharged from the internal combustion engine flows into the inflow-side cell 11 from the exhaust gas inflow-side end 11a (open), passes through the pores 14 of the partition wall 13, flows into the adjacent outflow-side cell 12, and flows out of the exhaust gas outflow-side end 12a (open). In this process, a particulate material (PM) which is less likely to pass through the pores 14 of the partition wall 13 is generally deposited on the partition wall 13 and/or in the pores 14 of the partition wall 13 in the inflow-side cell 12. The deposited particulate material is burned and removed by the catalyst function of the catalyst layers or at a predetermined temperature (for example, about 500 to 700°C). The exhaust gas is brought into contact with the catalyst layers 21 and 31 formed in the pores 14 of the partition wall 13. This causes carbon monoxide (CO) and hydrocarbon (HC) contained in the exhaust gas to be oxidized to water ($H_2O$) or carbon dioxide ($CO_2$) or the like, causes nitrogen oxide (NOx) to be reduced to nitrogen ($N_2$), and causes harmful components to be purified (detoxified). Herein, removal of the particulate material and purification of the harmful components such as carbon monoxide (CO) are also collectively referred to as "exhaust gas purifying performance." Hereinafter, each construction will be described in more detail.

(Substrate)

The wall flow type substrate 10 has a wall flow structure where the inflow-side cell 11 having the open at an exhaust gas inflow-side end 11a and the outflow-side cell 12 adjacent to the inflow-side cell 11 and having the open at an exhaust gas outflow-side end 12a are partitioned by the porous partition wall 13.

As the substrate, those conventionally used for this type of application and made of various materials and forms can be used. For example, the substrate is preferably composed of heat-resistant material capable of accommodating, for example, the removal of a particulate material by high-temperature combustion as well as exposure to high-temperature (for example, 400°C or higher) exhaust gas produced when an internal combustion engine is operated under a high-load condition. Examples of the heat-resistant material include ceramics such as cordierite, mullite, aluminum titanate, and silicon carbide (SiC); and alloys such as stainless steel. The form of the substrate can be appropriately adjusted from the viewpoint of exhaust gas purifying performance and suppression of an increase in pressure loss, and the like. For example, the outer shape of the substrate may also be a cylindrical shape, an elliptical cylindrical shape, or a polygonal cylindrical shape. Depending on a space in which the substrate will be incorporated, and the like, the capacity of the substrate (total cell volume) is preferably 0.1 to 5 L, and more preferably 0.5 to 3 L. The total length of the substrate in the extending direction (the total length of the partition wall in the extending direction) is preferably 10 to 500 mm, and more preferably 50 to 300 mm.

The inflow-side cell 11 and the outflow-side cell 12 are regularly arranged along the axis direction of the cylindrical shape. For cells adjacent to each other, the open end of one in the extending direction and the open end of another one are alternately sealed off. The inflow-side cell 11 and the outflow-side cell 12 can be set to a suitable shape and size in consideration of the flow rate and components of the exhaust gas to be supplied. For example, the opening shape of the inflow-side cell 11 and outflow-side cell 12 may be a triangle; a rectangular shape such as a square, a parallelogram, a rectangle, or a trapezoid; other polygon such as a hexagon or an octagon; and a circle. The exhaust gas purifying catalyst 100 may have a high ash capacity (HAC) structure where the cross-sectional area of the inflow-side cell 11 and the cross-sectional area of the outflow-side cell 12 are made different from each other. The number of the inflow-side cells 11 and the number of the outflow-side cells 12 can be appropriately set so that the occurrence of the turbulent flow of the exhaust gas can be promoted and clogging due to fine particles and the like contained in the exhaust gas can be suppressed. The number of the inflow-side cells 11 and the number of the outflow-side cells 12 are not particularly limited, and preferably 200 cpsi to 400 cpsi.

The partition wall 13 partitioning the cells adjacent to each other is not particularly limited as long as the partition wall 13 has a porous structure through which the exhaust gas can pass. The constitution of the partition wall 13 can be appropriately adjusted from the viewpoint of exhaust gas purifying performance, suppression of an increase in pressure loss, and improvement in the mechanical strength of a substrate, and the like. For example, when the catalyst layers 21 and 31 are formed on the surface of the pores 14 in the partition wall 13 using a catalyst slurry to be described later, and a pore diameter (for example, modal diameter (the pore diameter having the largest appearance ratio in the frequency distribution of the pore diameter (maximum value of distribution))) and a pore volume are large, the blockage of the pores due to the catalyst layers 21 and 31 are less likely to occur, and the exhaust gas purifying catalyst to be obtained tends to be less likely to cause an increase in pressure loss. However, the collection ability of the particulate material tends to be reduced, and the mechanical strength of the substrate tends to be also reduced. Meanwhile, when the pore diameter and the pore volume are small, the pressure loss is likely to be increased. However, the collection ability of the particulate material tends to be improved, and the mechanical strength of the substrate tends to be also improved.

From the viewpoint, the pore diameter (modal diameter) of the partition wall 13 of the wall flow type substrate 10 before the catalyst layers 21 and 31 are formed is preferably 8 to 25 $\mu$m, more preferably 10 to 22 $\mu$m, and still more preferably 13 to 20 $\mu$m. The thickness of the partition wall 13 (a length in a thickness direction perpendicular to the extending direction) is preferably 6 to 12 mil, and more preferably 6 to 10 mil. Furthermore, the pore volume of the partition wall 13 provided by a mercury intrusion method is preferably 0.2 to 1.5 $cm^3/g$, more preferably 0.25 to 0.9 $cm^3/g$, and still more preferably 0.3 to 0.8 $cm^3/g$. The porosity of the partition wall 13 provided by the mercury intrusion method is preferably 20 to 80%, more preferably 40 to 70%, and still more preferably 60 to 70%. The pore volume or the porosity is greater than or equal to the lower limit, whereby the increase in pressure loss tends to be further suppressed. The pore volume or the porosity is less than or equal to the upper limit, whereby the strength of the substrate tends to be further improved. The pore diameter (modal diameter), the pore volume, and the porosity mean values calculated by the mercury intrusion method under conditions described in the following Examples.

(Catalyst Layer)

Next, the catalyst layers will be described. The exhaust gas purifying catalyst 100 of the present embodiment includes a catalyst layer having a stacked structure including at least the first catalyst layer 21 formed on at least a part of the surface of the pores 14 in the partition wall 13 and the second catalyst layer 31 formed on at least a part of the first catalyst layer 21 (hereinafter, merely referred to as in-pore stacked catalyst layer"). In the stacked structure, the first catalyst layer 21 is disposed on the side of the surface of the pores 14 in the partition wall 13, and the second catalyst layer 31 is disposed on the side of the outermost surface of the stacked structure. Generally, the catalyst layer is obtained by firing a plurality of catalyst particles containing catalytic metal particles and carrier particles supporting the catalytic metal particles, and gas molecules of exhaust gas can penetrate the catalyst layer. In this respect, in the present embodiment, the exhaust gas flowing into the pores 14 of the partition wall 13 is sequentially brought into contact with catalyst layers according to the stacked order of the catalyst layers, to cause the purification of the exhaust gas to progress.

As used herein, the "first catalyst layer formed on at least a part of the surface of the pores in the partition wall", or the "second catalyst layer formed on at least a part of the first catalyst layer" is meant to include not only an aspect in which the first catalyst layer 21 is directly formed on the surface of the pores 14 as shown in Figure 1 and an aspect in which the second catalyst layer 31 is directly formed on the first catalyst layer 21 but also an aspect in which other catalyst layer is interposed between the surface of the pores 14 and the first catalyst layer 21 or between the first catalyst layer 21 and the second catalyst layer 31. Other catalyst layer may further be stacked on the surface of the second catalyst layer 31.

The catalytic metal contained in the catalyst layer is not particularly limited as long as the catalytic metal of the first catalyst layer 21 and the catalytic metal of the second catalyst layer 31 are different from each other, and various metal species which can function as oxidation catalysts and reduction catalysts can be used. Examples thereof include platinum group metals such as platinum (Pt), palladium (Pd), rhodium (Rh), ruthenium (Ru), iridium (Ir), and osmium (Os). Among these, from the viewpoint of oxidation activity, palladium (Pd) and platinum (Pt) are preferable, and from the viewpoint of reduction activity, rhodium (Rh) is preferable. In each of the first catalyst layer and the second catalyst layer, the catalytic metals may be used alone or in combination of two or more. As used herein, the fact that the catalytic metal contained in the first catalyst layer and the catalytic metal contained in the second catalyst layer are different from each other means that the combinations of the catalytic metals contained in the catalyst layers are different from each other in addition to an aspect in which the kinds of the catalytic metals contained in the catalyst layers are different from each other. Therefore, for example, this may also include an aspect in which the catalytic metal of the first catalyst layer 21 is Rh and Pt, and the catalytic metal of the second catalyst layer 31 is Pd and Pt in addition to an aspect in which the kinds of the catalytic metals contained in the catalyst layers are different from each other such as an aspect in which the catalytic metal of the first catalyst layer 21 is Rh, and the catalytic metal of the second catalyst layer 31 is Pd.

In the present embodiment, as described above, the exhaust gas purifying catalyst 100 has a structure where a plurality of catalyst layers are stacked in the same pore, and the catalytic metals contained in the stacked catalyst layers are different from each other. Thereby, a synergistic effect provided by forming a plurality of catalyst layers close to each other in the same pore as compared with an in-wall separate catalyst layer is expected in addition to a synergistic effect provided by the combination use of a plurality of catalyst layers having different catalyst activities.

As one aspect of such a synergistic effect, for the combination of the first and second catalyst layers (the combination of the catalytic metal and its position), it is preferable that the first catalyst layer contains a catalytic metal having excellent reduction activity, and the second catalyst layer contains a catalytic metal having excellent oxidization activity. It is more preferable that the first catalyst layer contains Rh, and the second catalyst layer contains Pd or Pt. It is still more preferable that the first catalyst layer contains Rh, and the second catalyst layer contains Pd. The in-pore catalyst layer structure tends to provide further improved exhaust gas purifying performance, particularly NOx removal rate. This reason is not particularly limited. The reason may be that, for example, the exhaust gas is first brought into contact with the second catalyst layer containing a catalytic metal having excellent oxidization activity (upper layer), and heat occurring when carbon monoxide (CO) and hydrocarbon (HC) are oxidized is propagated to the first catalyst layer containing a catalytic metal having excellent reduction activity (lower layer) along the flow of the exhaust gas, whereby an increase in temperature further promotes a reduction reaction. In particular, as compared with the in-wall separate catalyst layer, the first and second catalyst layers having different catalyst activities are formed close to each other in the in-pore stacked catalyst layer, whereby the exhaust gas bought into contact with the first catalyst layer immediately reaches the second catalyst layer. Therefore, the in-pore stacked catalyst layer is likely to propagate heat of an exothermic reaction occurring in one catalyst layer in the other catalyst layer.

In the reduction reaction of nitrogen oxide (NOx), carbon monoxide (CO) and hydrocarbon (HC) may act as a reducing agent, whereby not only the nitrogen oxide (NOx) but also the carbon monoxide (CO) and the hydrocarbon (HC) are preferably brought into contact with the catalyst layer mainly contributing to the reduction reaction of the nitrogen oxide (NOx). From such a viewpoint, as compared with the in-wall separate catalyst layer in which an upstream-side catalyst layer oxidizing the carbon monoxide (CO) and the hydrocarbon (HC) and a downstream-side catalyst layer reducing the nitrogen oxide (NOx) are separately formed at different in-wall positions, the in-pore stacked catalyst layer in which the second catalyst layer oxidizing the carbon monoxide (CO) and the hydrocarbon (HC) and the first catalyst layer reducing the nitrogen oxide (NOx) are formed close to each other in the same pore is considered to be advantageous in that, in addition to the nitrogen oxide (NOx), the carbon monoxide (CO) and the hydrocarbon (HC) are likely to be brought into contact with the first catalyst layer.

Meanwhile, an effect provided by a plurality of catalytic metals close to each other is also considered to be similarly obtained by forming a mixed catalyst layer obtained by mixing a plurality of catalytic metals instead of forming a plurality of catalyst layers close to each other in the same pore as with the present embodiment. However, in such a mixed catalyst layer, an effect seen in the in-pore stacked catalyst layer cannot be confirmed. One of the reasons to be considered is that, in the mixed catalyst layer, a region in which one catalytic metal is present separately from the other catalytic metal is substantially absent, so that the alloying of heterogeneous catalytic metals causes deteriorated purification performance. The reason is not limited thereto.

The fact that the catalytic metal in the first catalyst layer and the catalytic metal in the second catalyst layer are different from each other can be confirmed by electron beam microanalyzer analysis. When the carrier particles contained in the first catalyst layer and the carrier particles contained in the second catalyst layer are different from each other, the difference can be confirmed with a scanning electron microscope photograph of the cross section of the partition wall of the exhaust gas purifying catalyst. Specifically, in the scanning electron microscope photograph, a higher atomic number element tends to have a white contrast. From the viewpoint of specifying the catalytic metal species contained in each of the catalyst layers, it can be confirmed by subjecting the field of view of the scanning electron microscope to energy dispersive X-ray analysis.

The carrier particles contained in the first catalyst layer 21 and the carrier particles contained in the second catalyst layer 31 may be the same, or different from each other. Inorganic compounds heretofore used for this type of catalyst for exhaust gas purification can be considered as carrier particles supporting the catalytic metal particles. Examples thereof include oxygen storage capacity materials (OSC materials) such as cerium oxide (ceria: $CeO_2$) and ceria-zirconia composite oxide (CZ composite oxide), oxides such as aluminum oxide (alumina: $Al_2O_3$), zirconium oxide (zirconia: $ZrO_2$), silicon oxide (silica: $SiO_2$), and titanium oxide (titania: $TiO_2$), and composite oxides mainly containing the oxides. These may be composite oxides or solid solutions containing rare earth elements such as lanthanum and yttrium, transition metal elements, and alkaline-earth metal elements. These carrier particles may be used alone or in combination of two or more. Herein, the oxygen storage capacity material (OSC material) stores oxygen in the exhaust gas when the air-fuel ratio of the exhaust gas is lean (that is, an atmosphere on the oxygen excess side), and releases the stored oxygen when the air-fuel ratio of the exhaust gas is rich (that is, an atmosphere on the fuel excess side).

From the viewpoint of improvement in the exhaust gas purifying performance, and suppression of the progression of the grain growth (sintering) of the catalytic metal, and the like, the supporting rate of the catalytic metal of the first catalyst layer (the amount of the catalytic metal per substrate 1L) is preferably 0.05 to 10 g/L, more preferably 1 to 8 g/L, and still more preferably 1 to 6 g/L. From the same viewpoint, the supporting rate of the catalytic metal of the second catalyst layer (the amount of the catalytic metal per substrate 1L) is preferably 0.055 to 10 g/L, more preferably 1 to 8 g/L, and still more preferably 1 to 6 g/L.

The formation place of the in-pore stacked catalyst layer is not particularly limited as long as the aspect can exhibit desired exhaust gas purifying performance. The in-pore stacked catalyst layer may be formed over the entire surface of the pores 14 in the partition wall 13 of the wall flow type substrate 10 (Figure 1), or may be formed on a part of the partition wall 13 of the wall flow type substrate 10 (Figure 2).

The pore diameter (modal diameter) of the partition wall of the exhaust gas purifying catalyst provided by the mercury intrusion method, in a state where the in-pore stacked catalyst layer is formed is preferably 10 to 23 $\mu$m, more preferably 12 to 20 $\mu$m, and still more preferably 14 to 18 $\mu$m. The pore volume of the partition wall of the exhaust gas purifying catalyst provided by the mercury intrusion method, in a state where the in-pore stacked catalyst layers are formed is preferably 0.2 to 1.0 cm$^3$/g, more preferably 0.25 to 0.9 cm$^3$/g, and still more preferably 0.3 to 0.8 cm$^3$/g. Furthermore, the porosity of the partition wall of the exhaust gas purifying catalyst provided by the mercury intrusion method, in a state where the in-pore stacked catalyst layers are formed is preferably 20 to 80%, more preferably 30 to 70%, and still more preferably 35 to 60%. The pore diameter (modal diameter), the pore volume, and the porosity mean values calculated by the mercury intrusion method under conditions described in the following Examples.

[Method for Producing Exhaust Gas Purifying Catalyst]

A method for producing an exhaust gas purifying catalyst of the present embodiment is a method for producing an exhaust gas purifying catalyst 100 for purifying exhaust gas discharged from an internal combustion engine. The method includes: a step S0 of preparing a wall flow type substrate 10 in which an inflow-side cell 11 having an open at an exhaust gas inflow-side end 11a, and an outflow-side cell 12 adjacent to the inflow-side cell 11 and having an open at an exhaust gas outflow-side end 12a are separated by a porous partition wall 13; a first catalyst layer forming step S1 of coating a first catalyst slurry 21a containing a catalytic metal on at least a part of a surface of pores 14 in the partition wall 13 of the wall flow type substrate 10 to form a first catalyst layer 21; and a second catalyst layer forming step S2 of coating a second catalyst slurry 31a containing a catalytic metal different from the catalytic metal contained in the first catalyst layer 21 on at least a part of a surface of the first catalyst layer 21 to form a second catalyst layer 31.

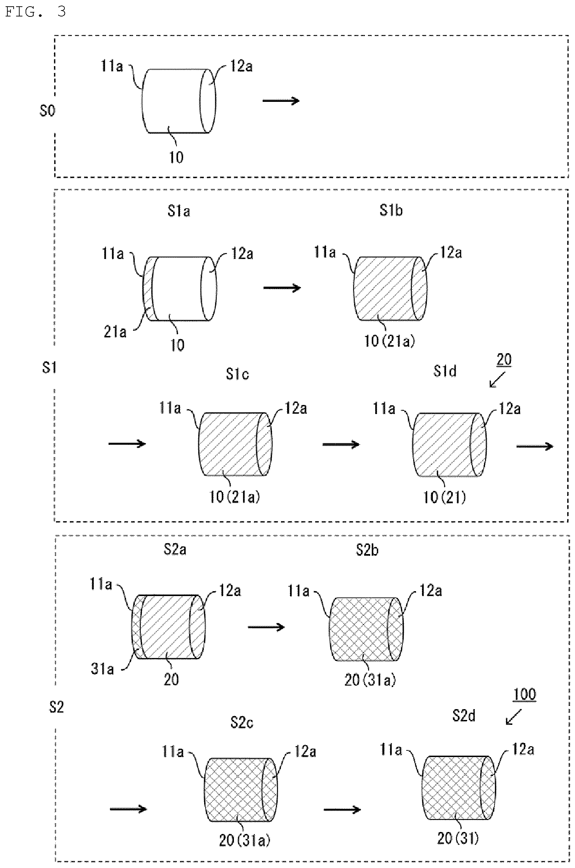

Hereinafter, each of the steps will be described with reference to a process diagram schematically showing a method for producing an exhaust gas purifying catalyst 100 of the present embodiment shown in Figure 3. Herein, a wall flow type substrate before the first catalyst layer 21 is formed is represented as "substrate 10"; a wall flow type substrate after the first catalyst layer 21 is formed is represented as "substrate 20"; and a wall flow type substrate after the second catalyst layer 31 is formed is represented as "exhaust gas purifying catalyst 100."

<Preparing Step>

In the preparing step S0, the wall flow type substrate described in the exhaust gas purifying catalyst is prepared as a substrate.

<Catalyst Layer Forming Step>

(First Catalyst Layer Forming Step)

In the first catalyst layer forming step S1, the first catalyst slurry 21a is coated on the surface of the pores in the partition wall of the substrate 10, to obtain the substrate 20 in which the first catalyst layer 21 is formed (Figure 3). The method for coating the first catalyst slurry 21a is not particularly limited, and examples thereof include a method in which a part of the substrate 10 is impregnated with the first catalyst slurry 21a, to spread the first catalyst slurry 21a over the entire partition wall of the substrate 10. More specific examples thereof include a method including a step S1a of impregnating the exhaust gas inflow-side end 11a or the exhaust gas outflow-side end 12a of the substrate 10 with the first catalyst slurry 21a, a step S1b of introducing gas into the substrate 10 from the side of the end to coat the first catalyst slurry 21a with which the substrate 10 is impregnated on the surface of the pores in the porous partition wall, and a step S1c of drying the coated first catalyst slurry 21a. The formation method of the first catalyst layer 21 is not particularly limited, and examples thereof include a method using a step S1d of firing the dried first catalyst slurry 21a to form the first catalyst layer 21. The first catalyst layer 21 thus obtained is disposed along the surface of the pores in the partition wall.

The impregnation method of the first catalyst slurry 21a in the step S1a is not particularly limited, and examples thereof include a method in which an end of the substrate 10 is immersed in the first catalyst slurry 21a. In the method, the first catalyst slurry 21a may be pulled up by discharging (suctioning) gas from its opposite end if needed. The first catalyst slurry 21a may be supplied into the wall flow type substrate 10 from the exhaust gas inflow-side end 11a, or may be supplied into the wall flow type substrate 10 from the exhaust gas outflow-side end 12a. Among these, the first catalyst slurry 21a is preferably supplied from the exhaust gas inflow-side end 11a. This makes it possible to introduce the gas in the same direction as the introduction direction of the exhaust gas in a step S1b to be described later, whereby the first catalyst slurry 21a can be coated along the flow of the exhaust gas so as to correspond to a complicated pore shape. Therefore, the suppression of the increase in the pressure loss can be anticipated, and improvement in exhaust gas purifying performance can also be expected.

In the step S1b, gas is introduced into the substrate 10 from the side of the end impregnated with the first catalyst slurry 21a. Therefore, the impregnated first catalyst slurry 21a moves deeply along the flow of the gas in the substrate 10 from the inflow-side of the gas, and reaches the outflow-side end of the gas. In the process, the first catalyst slurry 21a passes through the pores of the partition wall, whereby the first catalyst slurry 21a can be coated on the surface of the pores. By producing a difference in pressure between an exhaust gas discharge side and an exhaust gas inflow-side, a portion on which the catalyst slurry is coated can also be adjusted in the thickness direction of the partition wall.

The drying condition in the step S1c is not particularly limited as long as a solvent is volatilized from the first catalyst slurry 21a. For example, a drying temperature is preferably 100 to 225°C, more preferably 100 to 200°C, and still more preferably 125 to 175°C. A drying time is preferably 0.5 to 2 hours, and more preferably 0.5 to 1.5 hours.

A firing condition in the step S1d is not particularly limited as long as the first catalyst layer 21 can be formed from the first catalyst slurry 21a. For example, a firing temperature is not particularly limited, and preferably 400 to 650°C, more preferably 450 to 600°C, and still more preferably 500 to 600°C. A firing time is preferably 0.5 to 2 hours, and more preferably 0.5 to 1.5 hours.

The present embodiment also includes a modification in which a step S2d to be described later is performed in the second catalyst layer forming step without performing the step S1d in the first catalyst layer forming step, to simultaneously fire the first catalyst slurry 21a and the second catalyst slurry 31a.

(Second Catalyst Layer Forming Step)

In the second catalyst layer forming step S2, the second catalyst slurry 31a is further coated in the partition wall of the substrate 20 to form the second catalyst layer 31 (Figure 3). Thereby, the exhaust gas purifying catalyst 100 is obtained, in which the second catalyst layer 31 is formed on the surface of the first catalyst layer 21 in the partition wall of the substrate 20. The specific aspect of the second catalyst layer forming step may be the same as that of the first catalyst layer forming step except that the second catalyst slurry 31a is coated on the substrate 20 on which the first catalyst layer 21 has been formed, and the catalytic metal contained in the second catalyst slurry 31a is different from the catalytic metal contained in the first catalyst slurry 21a. Hereinafter, the second catalyst layer forming step S2 in Figure 3 will be described again.

The coating method of the second catalyst slurry 31a is not particularly limited, and examples thereof include a method in which a part of the substrate 20 is impregnated with the second catalyst slurry 31a, to spread the second catalyst slurry 31a over the entire partition wall of the substrate 20. More specific examples thereof include a method including a step S2a of impregnating the exhaust gas inflow-side end 11a or the exhaust gas outflow-side end 12a of the substrate 20 with the second catalyst slurry 31a, a step S2b of introducing gas into the substrate 20 from the side of the end to coat the second catalyst slurry 31a with which the substrate 20 is impregnated on the porous partition wall, and a step S2c of drying the coated second catalyst slurry 31a. The formation method of the second catalyst layer 31 is not particularly limited, and examples thereof include a method using a step S2d of firing the coated second catalyst slurry 31a to form the second catalyst layer 31. The second catalyst layer 31 thus obtained is disposed along the surface of the first catalyst layer 21.

The impregnation method of the second catalyst slurry 31a in the step S2a is not particularly limited, and examples thereof include a method in which an end of the substrate 20 is immersed in the second catalyst slurry 31a. In the method, the second catalyst slurry 31a may be pulled up by discharging (suctioning) gas from its opposite end if needed. The second catalyst slurry 31a may be supplied into the wall flow type substrate 20 from the exhaust gas inflow-side end 11a, or may be supplied into the wall flow type substrate 20 from the exhaust gas outflow-side end 12a. Among these, the second catalyst slurry 31a is preferably supplied from the exhaust gas inflow-side end 11a. This makes it possible to introduce the gas in the same direction as the introduction direction of the exhaust gas in a step S2b to be described later, whereby the second catalyst slurry 31a can be coated along the flow of the exhaust gas so as to correspond to a complicated pore shape. Therefore, the suppression of the increase in the pressure loss can be anticipated, and improvement in exhaust gas purifying performance can also be expected.

In the step S2b, gas is introduced into the substrate 20 from the side of the end 11a impregnated with the second catalyst slurry 31a. Therefore, the impregnated second catalyst slurry 31a moves deeply along the flow of the gas in the substrate 20 from the inflow-side of the gas, and reaches the outflow-side end of the gas. In the process, the second catalyst slurry 31a passes through the pores of the partition wall, whereby the second catalyst slurry 31a can be coated on the surface of the first catalyst layer.

The drying condition in the step S2c is not particularly limited as long as a solvent is volatilized from the second catalyst slurry 31a. For example, a drying temperature is preferably 100 to 225°C, more preferably 100 to 200°C, and still more preferably 125 to 175°C. A drying time is preferably 0.5 to 2 hours, and more preferably 0.5 to 1.5 hours.

A firing condition in the step S2d is not particularly limited as long as the second catalyst layer 31 can be formed from the second catalyst slurry 31a. For example, a firing temperature is not particularly limited, and preferably 400 to 650°C, more preferably 450 to 600°C, and still more preferably 500 to 600°C. A firing time is preferably 0.5 to 2 hours, and more preferably 0.5 to 1.5 hours.

(Catalyst Slurry)

The first catalyst slurry 21a and the second catalyst slurry 31a (hereinafter, common matters are also referred to collectively simply as "catalyst slurry") for forming the first catalyst layer 21 and the second catalyst layer 31 (hereinafter, common matters are also referred to collectively simply as "catalyst layer") will be described. The catalyst slurry contains a catalyst powder and a solvent such as water. The catalyst powder is a population of a plurality of catalyst particles containing catalytic metal particles and carrier particles supporting the catalytic metal particles, and the catalyst layers are formed through a firing step to be described later. As long as the catalytic metal contained in the first catalyst slurry and the catalytic metal contained in the second catalyst slurry are different from each other, the kinds of the catalyst particles are not particularly limited, and the catalyst particles can be appropriately selected to be used from known catalyst particles. From the viewpoint of the coatability of the catalyst slurry into the pores 14 in the partition wall 13, the solid content rate of the catalyst slurry is preferably 1 to 50% by mass, more preferably 10 to 40% by mass, and still more preferably 15 to 30% by mass.

The D90 particle size of the catalyst powder contained in the catalyst slurry is preferably 1 to 7 μm, more preferably 1 to 6 μm, and still more preferably 1 to 5 μm. When the D90 particle size is 1 μm or more, a pulverization time when the catalyst powder is ground in a milling apparatus can be shortened, which tends to provide further improved work efficiency. When the D90 particle size is 7 μm or less, the blockage in the partition wall by coarse particles is suppressed, which tends to suppress an increase in pressure loss. Herein, the D90 particle size can be measured with a laser diffraction particle size analyzer (for example, a laser diffraction particle size analyzer SALD-3100, manufactured by Shimadzu Corporation, and the like).

The catalytic metal contained in the first catalyst slurry 21a and the catalytic metal contained in the second catalyst slurry 31a are not particularly limited as long as the catalytic metals are different from each other, and various metal species which can function as oxidation catalysts and reduction catalysts can be used. Specific examples thereof include the same catalytic metals as those exemplified in the catalytic metals contained in the catalyst layers. These catalytic metals may be used alone or in combination of two or more.

In one aspect, examples of the combination of the first catalyst slurry 21a and the second catalyst slurry 31a include the same aspect as that described in the combination of the first catalyst layer and the second catalyst layer formed from the catalyst slurries. Specifically, it is preferable that the first catalyst slurry contains a catalytic metal having excellent reduction activity, and the second catalyst slurry contains a catalytic metal having excellent oxidization activity. It is more preferable that the first catalyst slurry contains Rh, and the second catalyst slurry contains Pd or Pt. It is still more preferable that the first catalyst slurry contains Rh, and the second catalyst slurry contains Pd.

From the viewpoint of increasing the area of contact with exhaust gas, the average particle size of the catalytic metal particles in the catalyst slurry is preferably smaller. Specifically, the average particle size of the catalytic metal particles is preferably 1 to 15 nm, more preferably 1 to 10 nm, and still more preferably 1 to 7 nm. The average particle size of the catalytic metal particles can be confirmed by using, for example, a scanning transmission electron microscope (STEM) such as HD-2000 manufactured by Hitachi High-Technologies Corporation. Herein, the circle-equivalent diameters of ten randomly extracted catalytic metal particles are calculated, and the average value thereof is taken as the average particle size of the catalytic metal particles.

As the carrier particles contained in the catalyst slurry, an inorganic compound heretofore used for this type of catalyst for exhaust gas purification can be considered. Specific examples thereof include the same carrier particles as those exemplified in the carrier particles contained in the catalyst layers. These carrier particles may be used alone or in combination of two or more.

From the viewpoint of exhaust gas purifying performance, the specific surface area of the carrier particles contained in the catalyst slurry is preferably 10 to 500 $m^2$/g, and more preferably 30 to 200 $m^2$/g.

From the viewpoint of improvement in the exhaust gas purifying performance, and suppression of the progression of the grain growth (sintering) of the catalytic metals, and the like, the supporting rate of the catalytic metals (the amount of the catalytic metal per substrate 1L) derived from the first catalyst slurry in a state where the catalytic metals are supported on the wall flow type substrate is preferably 0.05 to 10 g/L, more preferably 1 to 8 g/L, and still more preferably 1 to 6 g/L. From the same viewpoint, the supporting rate of the catalytic metals (the amount of the catalytic metals per substrate 1L) derived from the second catalyst slurry in a state where the catalytic metals are supported on the wall flow type substrate is preferably 0.05 to 10 g/L, more preferably 1 to 8 g/L, and still more preferably 1 to 6 g/L.

[Application]

An air-fuel mixture containing oxygen and fuel gas is supplied into the internal combustion engine (engine), where the air-fuel mixture is burned to convert combustion energy into mechanical energy. At this time, the burned air-fuel mixture becomes exhaust gas and is discharged to the exhaust system. An exhaust gas purifying apparatus including an exhaust gas purifying catalyst is provided in the exhaust system. The exhaust gas purifying catalyst purifies harmful components (for example, carbon monoxide (CO), hydrocarbon (HC), and nitrogen oxides (NOx)) contained in the exhaust gas, and collects and removes a particulate material (PM) contained in the exhaust gas. In particular, the exhaust gas purifying catalyst of the present embodiment is preferably used for a gasoline particulate filter (GPF) which can collect and remove the particulate material contained in the exhaust gas of the gasoline engine.

Examples

Hereinafter, the features of the present invention will be described further specifically by way of Test Examples, Examples, and Comparative Examples, but the present invention is in no way limited thereto. That is, materials, used amounts, ratios, treatment contents, and treatment procedures and the like shown in the following Examples can be appropriately changed without departing from the spirit of the present invention. Various values specified in the following Examples for production conditions and evaluation results have meaning as preferable upper limits or preferable lower limits in embodiments of the present invention, and a preferable range may be defined by a combination of the upper or lower limit described above and a value specified in one of the following Examples or values specified in different Examples.

(Example)

An alumina powder having a D50 particle size of 28 $\mu$m and a BET specific surface area of 141 m$^2$/g was impregnated with an aqueous solution of palladium nitrate, and then fired at 500°C for 1 hour, to obtain a Pd-supporting alumina powder (Pd content: 8.6% by mass). A zirconia-lanthanum modified alumina powder having a D50 particle size of 29 $\mu$m and a BET specific surface area of 145 m$^2$/g was impregnated with an aqueous solution of rhodium nitrate, and then fired at 500°C for 1 hour, to obtain a Rh-supporting zirconia lanthanum modified alumina powder (Rh content: 1.4% by mass).

0.5 kg of the obtained Rh-supporting zirconia-lanthanum modified alumina powder, 1 kg of a ceria-zirconia composite oxide powder having a D50 particle size of 10 $\mu$m and a BET specific surface area of 71 m2/g, 97.5 g of an aqueous solution of lanthanum nitrate of 46% by mass, and ion exchange water were mixed to obtain a mixture. The mixture was charged into a ball mill, where the mixture was milled until a catalyst powder had a predetermined particle size distribution, to obtain a first catalyst slurry having a D90 particle size of 3.0 $\mu$m.

0.5 kg of the obtained Pd-supporting alumina powder, 1 kg of a ceria-zirconia composite oxide powder having a D50 particle size of 10 $\mu$m and a BET specific surface area of 71 m2/g, 97.5 g of an aqueous solution of lanthanum nitrate of 46% by mass, and ion exchange water were mixed to obtain a mixture. The mixture was charged into a ball mill, where the mixture was milled until a catalyst powder had a predetermined particle size distribution, to obtain a second catalyst slurry having a D90 particle size of 3.0 $\mu$m.

Then, a wall flow type honeycomb substrate was prepared, which was made of cordierite (number of cells/mil thickness: 300 cpsi/8 mil, diameter: 118.4 mm, total length: 127 mm, porosity: 65%). By immersing an exhaust gas inflow-side end of the substrate in a first catalyst slurry, and subjecting the side of its opposite end to reduced-pressure suction, the first catalyst slurry was impregnated and retained in a substrate end. Gas was caused to flow into the substrate from the exhaust gas inflow-side end of the substrate, to coat the first catalyst slurry on the surface of pores in a partition wall of the substrate, and to blow off the excess catalyst slurry from the exhaust gas outflow-side end of the substrate. Then, the substrate on which the first catalyst slurry was coated was dried at 150°C, and then fired at 550°C in an air atmosphere, to produce the substrate having a first catalyst layer. The coating amount of the first catalyst layer after firing was 30.45 g per substrate 1L (excluding the weight of a platinum group metal).

By immersing the exhaust gas inflow-side end of the substrate on which the first catalyst layer was formed in a second catalyst slurry, and subjecting the side of its opposite end to reduced-pressure suction, the second catalyst slurry was impregnated and retained in a substrate end. Gas was caused to flow into the substrate from the exhaust gas inflow-side end of the substrate, to coat the second catalyst slurry on the surface of pores in a partition wall of the substrate and to blow off the excess catalyst slurry from the exhaust gas outflow-side end of the substrate. Then, the substrate on which the second catalyst slurry was coated was dried at 150°C, and then fired at 550°C in an air atmosphere, to produce an exhaust gas purifying catalyst having a second catalyst layer. The coating amount of the second catalyst layer after firing was 30.45 g per substrate 1L (excluding the weight of a platinum group metal). The details are shown in Table 1.

(Comparative Example 1)

The first catalyst slurry and the second catalyst slurry were mixed, to prepare a mixed slurry. By immersing an exhaust gas inflow-side end of a wall flow type honeycomb substrate made of cordierite (number of cells/mil thickness: 300 cpsi/8 mil, diameter: 118.4 mm, total length: 127 mm, porosity: 65%) in the mixed catalyst slurry, and subjecting the side of its opposite end to reduced-pressure suction, the mixed catalyst slurry was impregnated and retained in a substrate end. Gas was caused to flow into the substrate from the exhaust gas inflow-side end of the substrate, to coat the mixed catalyst slurry on the surface of pores in a partition wall, and to blow off the excess mixed catalyst slurry from the exhaust gas outflow-side end of the substrate. Then, the substrate on which the mixed catalyst slurry was coated was dried at 150°C, and then fired at 550°C in an air atmosphere, to produce the substrate having a Pd-Rh mixed catalyst layer. The coating amount of the Pd-Rh mixed catalyst layer after firing was 60.9 g per substrate 1L (excluding the weight of a platinum group metal).

(Comparative Example 2)

A wall flow type honeycomb substrate was prepared, which was made of cordierite (number of cells/mil thickness: 300 cpsi/8 mil, diameter: 118.4 mm, total length: 127 mm, porosity: 65%). By immersing an exhaust gas outflow-side end of the substrate in the first catalyst slurry, and subjecting the side of its opposite end to reduced-pressure suction, the first catalyst slurry was impregnated and retained in the substrate end. In this case, by producing a difference in pressure between an exhaust gas discharge side and an exhaust gas inflow-side, a first catalyst slurry was coated on an upstream side in a partition wall. Then, the substrate on which the first catalyst slurry was coated was dried at 150°C, and then fired at 550°C in an air atmosphere, to produce the substrate having an upstream-side catalyst layer. The coating amount of the upstream-side catalyst layer after firing was 30.45 g per substrate 1L (excluding the weight of a platinum group metal).

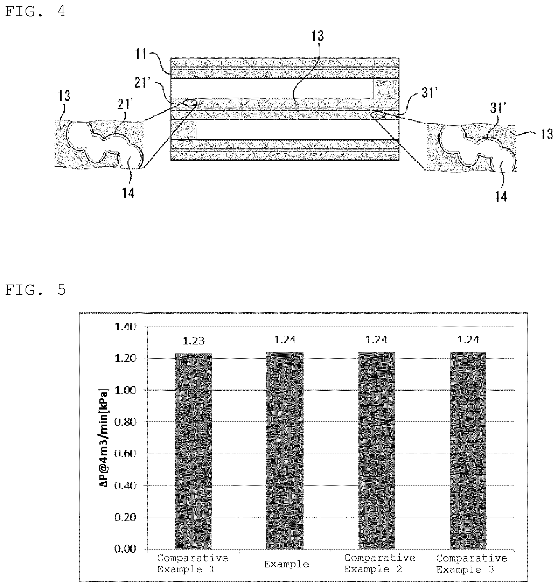

By immersing the exhaust gas inflow-side end of the substrate on which the first catalyst layer was formed in the second catalyst slurry, and subjecting the side of its opposite end to reduced-pressure suction, the second catalyst slurry was impregnated and retained in the substrate end. In this case, by producing a difference in pressure between an exhaust gas discharge side and an exhaust gas inflow-side, a first catalyst slurry was coated on an upstream side in a partition wall. Then, the substrate on which the second catalyst slurry was coated was dried at 150°C, and then fired at 550°C in an air atmosphere, to produce an exhaust gas purifying catalyst having a downstream-side catalyst layer. The coating amount of the downstream-side catalyst layer after firing was 30.45 g per substrate 1L (excluding the weight of a platinum group metal). The details are shown in Table 1. A cross-sectional view of an exhaust gas purifying catalyst of Comparative Example 2 having an upstream-side catalyst layer 21' and a downstream-side catalyst layer 31' in a partition wall 13 is shown in Figure 4.

(Comparative Example 3)

An exhaust gas purifying catalyst was produced by the same operation as that of Comparative Example 2 except that an exhaust gas inflow-side end was immersed in the first catalyst slurry, and an exhaust gas outflow-side end was immersed in the second catalyst slurry. The details are shown in Table 1.

[Table 1]

| | Catalytic metal | | Stacked structure of catalyst layer | Coating position in partition wall | Catalyst slurry | Catalyst composition/g/L | | | |
|---|---|---|---|---|---|---|---|---|---|
| | Pd/Rh | g/L | | | | pd-supporting alumina | Rh-supporting modified alumina | Ceria-zirconia composite oxide | Lanthanum (in terms of lanthanum oxide) |
| Example | 6/1 | 1.06 | Presence | Exhaust gas inflow side to exhaust gas outflow side | First | 0 | 10 | 20 | 0.45 |
| | | | | | Second | 10 | 0 | 20 | 0.45 |
| Comparative Example 1 | 6/1 | 1.06 | Absence | Exhaust gas inflow side to exhaust gas outflow side | Mixture of first and second catalyst slurries | 10 | 10 | 40 | 0.9 |
| Comparative Example 2 | 6/1 | 1.06 | Absence | Exhaust gas outflow side | First | 0 | 10 | 20 | 0.45 |
| | | | | Exhaust qas inflow side | Second | 10 | 0 | 20 | 0.45 |
| Comparative Example 3 | 6/1 | 1.06 | Absence | Exhaust gas inflow side | First | 0 | 10 | 20 | 0.45 |
| | | | | Exhaust gas outflow side | Second | 10 | 0 | 20 | 0.45 |
| * The weight of the platinum group is excluded from the catalyst composition. | | | | | | | | | |

[Measurement of Particle Size Distribution]

The D90 particle size of the catalyst slurry was measured by a laser scattering method using a laser diffraction particle size analyzer SALD-3100 manufactured by Shimadzu Corporation.

[Calculation of Porosity]

Samples (1 cm$^3$) for measuring a pore diameter (modal diameter) and a pore volume were collected from partition walls of an exhaust gas inflow-side portion, exhaust gas outflow-side portion, and intermediate portion of the exhaust gas purifying catalysts produced in Example and Comparative Examples, and the substrate before the catalyst slurry was coated. The samples for measurement were dried, and distributions of pores were then measured by a mercury intrusion method using a mercury porosimeter (trade names: PASCAL140 and PASCAL440, manufactured by Thermo Fisher Scientific Corporation). In this case, a low-pressure region (0 to 400 Kpa) was measured by PASCAL140, and a high-pressure region (0.1 Mpa to 400 Mpa) was measured by PASCAL440. From the obtained distributions of pores, a pore diameter (modal diameter) was obtained, and pore volumes of pores each having a pore diameter of 1 $\mu$m or more were calculated. As the values of the pore diameters and pore volumes, the average value of the values obtained in the exhaust gas inflow-side portion, the exhaust gas outflow-side portion, and the intermediate portion was employed.

Then, the porosities of the exhaust gas purifying catalysts produced in Example and Comparative Examples were calculated according to the following formula. The results are shown in the following Table 2.

$$\text{Porosity of Exhaust Gas Purifying Catalyst (\%)} =$$

$$\text{Pore Volume of Exhaust Gas Purifying Catalyst (cc/g)/Pore}$$

$$\text{Volume of Substrate (cc/g)} \times \text{Porosity of Substrate (\%)}$$

Porosity of Substrate (%) = 65%

[Table 2]

|  | Pore diameter ($\mu$m) | Porosity (%) |
|---|---|---|
| Substrate | 15.98 | 65.0 |
| Example | 15.45 | 39.4 |
| Comparative Example 1 | 15.48 | 40.8 |
| Comparative Example 2 | 15.31 | 40.9 |
| Comparative Example 3 | 15.31 | 40.9 |

[Measurement of Pressure Loss]

Each of the exhaust gas purifying catalysts produced in Example and Comparative Examples, and a substrate before a catalyst slurry was coated was set in a pressure loss measuring device (manufactured by Tsukubarikaseiki Corporation), and air having room temperature was caused to flow into the set exhaust gas purifying catalysts. A value obtained by measuring a differential pressure of the air on introduction and discharge sides when the outflow amount of the air from the exhaust gas purifying catalyst was 4 m3/min was taken as the pressure loss of the exhaust gas purifying catalyst. The results are shown in Figure 5. As shown in Figure 5, it is found that the exhaust gas purifying catalyst produced in Example has pressure loss equivalent to that of the exhaust gas purifying catalysts produced in Comparative Examples, so that the pressure loss is not impaired even if the catalyst layer is multi-layered in the same pore.

[Observation of Coat State]

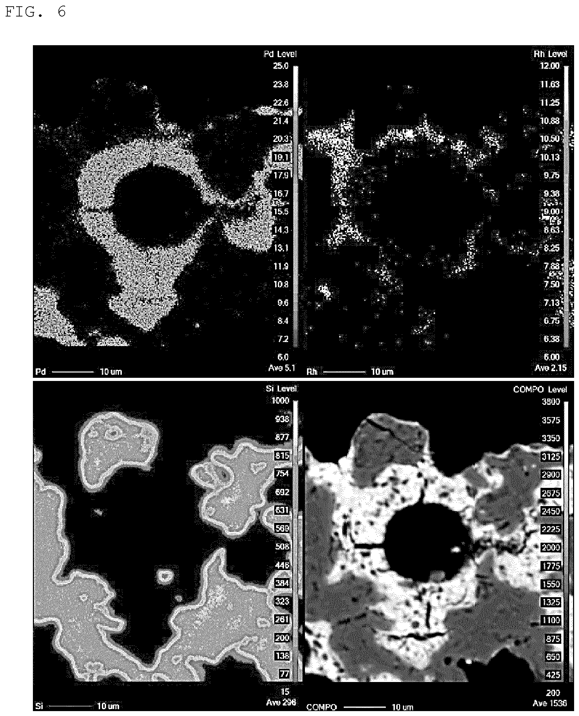

A sample (1 cm$^3$) for measurement of an electron probe microanalyzer analysis (EPMA) was produced from the partition wall of the exhaust gas purifying catalyst produced in Example. The sample for measurement was embedded in a resin, and subjected to vapor deposition as a pretreatment. The sample for measurement after the pretreatment was observed using an electron probe microanalyzer (trade name: JXA-8230, manufactured by JEOL Ltd.), and the state of the catalyst supported on the substrate was confirmed. The results are shown in Figure 6. The distributions of Si contained in the substrate and Rh contained in the first catalyst layer, and the distribution of Pd contained in the second catalyst layer show that the exhaust gas purifying catalyst has the stacked structure where the second catalyst layer is stacked on the surface of the first catalyst layer supported on the substrate

[Durability of Actual Device and Evaluation of Actual Device]

Each of the exhaust gas purifying catalysts produced in Example and Comparative Examples was stored in a catalyst convertor, and set at a position immediately below an exhaust line of an engine set at a durability bench. Then, the engine was started, to carry out a durability test using an actual device at 950°C for 20 hours with a stoichiometric state ($\lambda = 1$) for 20 seconds, a fuel cut for 5 seconds, and a rich spike ($\lambda = 0.8276$) for 5 seconds being taken as one cycle.

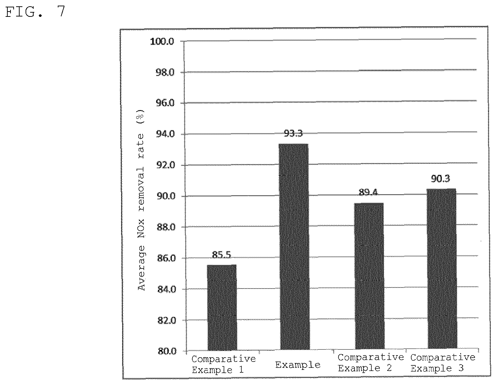

Then, the exhaust gas purifying catalyst after the durability test, stored in the catalyst converter was used, and evaluation was carried out for the exhaust gas purifying catalyst using an engine bench under conditions to be described later, to measure an average NOx removal rate in $\lambda = 0.958$ to 1.000. The results are shown in Figure 7. As shown in Figure 7, the exhaust gas purifying catalyst produced in Example was confirmed to have a higher NOx removal rate than that of the exhaust gas purifying catalysts produced in Comparative Examples to provide improvement in the NOx removal rate.

[Table 3]

| Evaluation of engine bench | | |
|---|---|---|
| Space rate | | $86,000h^{-1}$ |
| Inlet temp | | 500°C |
| Air-fuel ratio | | $\lambda = 0.958\text{-}1.000$ |
| Main gas composition | CO | 0.500-1.500% |
| | Total HC | 0.020-0.100%C |
| | NOx | 0.100% |
| | $O_2$ | % 0.080-0.145% |
| | Others | $N_2$, $H_2O$, $CO_2$ and the like |

Industrial Applicability

An exhaust gas purifying catalyst of the present invention removes a particulate material contained in exhaust gas of a gasoline engine, whereby the exhaust gas purifying catalyst can be widely and effectively utilized. The exhaust gas purifying catalyst of the present invention removes a particulate material contained in exhaust gas of not only the gasoline engine but also a diesel engine, a jet engine, a boiler, or a gas turbine or the like, whereby the exhaust gas purifying catalyst can be effectively utilized.

Reference Signs List

10 wall flow type substrate
11 inflow-side cell
11a exhaust gas inflow-side end
12 outflow-side cell
12a exhaust gas outflow-side end
13 partition wall
14 pores
20 wall flow type substrate after first catalyst layer is formed
21 first catalyst layer
21a first catalyst slurry
31 second catalyst layer

31a second catalyst slurry
100 exhaust gas purifying catalyst

**Claims**

1. An exhaust gas purifying catalyst for purifying exhaust gas discharged from an internal combustion engine, comprising:

   a wall flow type substrate in which an inflow-side cell having an open at an exhaust gas inflow-side end, and an outflow-side cell adjacent to the inflow-side cell and having an open at an exhaust gas outflow-side end are separated by a porous partition wall;
   a first catalyst layer formed on at least a part of a surface of pores in the partition wall and containing a catalytic metal; and
   a second catalyst layer formed on at least a part of the first catalyst layer and containing a catalytic metal different from the catalytic metal contained in the first catalyst layer.

2. The exhaust gas purifying catalyst according to claim 1, wherein the exhaust gas purifying catalyst has a stacked structure where the first catalyst layer and the second catalyst layer are stacked over the entire surface of the pores in the partition wall.

3. The exhaust gas purifying catalyst according to claim 1 or 2, wherein the second catalyst layer contains Pd as the catalytic metal.

4. The exhaust gas purifying catalyst according to any one of claims 1 to 3, wherein the first catalyst layer contains Rh as the catalytic metal.

5. The exhaust gas purifying catalyst according to any one of claims 1 to 4, wherein the internal combustion engine is a gasoline engine.

6. A method for producing an exhaust gas purifying catalyst for purifying exhaust gas discharged from an internal combustion engine, the method comprising:

   a step of preparing a wall flow type substrate in which an inflow-side cell having an open at an exhaust gas inflow-side end, and an outflow-side cell adjacent to the inflow-side cell and having an open at an exhaust gas outflow-side end are separated by a porous partition wall;
   a first catalyst layer forming step of coating a first catalyst slurry containing a catalytic metal on at least a part of a surface of pores in the partition wall of the wall flow type substrate to form the first catalyst layer; and
   a second catalyst layer forming step of coating a second catalyst slurry containing a catalytic metal different from the catalytic metal contained in the first catalyst layer on at least a part of a surface of the first catalyst layer to form a second catalyst layer.

7. The method for producing an exhaust gas purifying catalyst according to claim 6,
   wherein:

   the first catalyst slurry is supplied into the wall flow type substrate from the exhaust gas inflow-side end in the first catalyst layer forming step; and
   the second catalyst slurry is supplied into the wall flow type substrate from the exhaust gas inflow-side end in the second catalyst layer forming step.

8. The method for producing an exhaust gas purifying catalyst according to claim 6,
   wherein:

   the first catalyst slurry is supplied into the wall flow type substrate from the exhaust gas outflow-side end in the first catalyst layer forming step; and
   the second catalyst slurry is supplied into the wall flow type substrate from the exhaust gas outflow-side end in the second catalyst layer forming step.

9. The method for producing an exhaust gas purifying catalyst according to claim 6,
   wherein:

   the first catalyst slurry is supplied into the wall flow type substrate from the exhaust gas inflow-side end in the first catalyst layer forming step; and
   the second catalyst slurry is supplied into the wall flow type substrate from the exhaust gas outflow-side end in the second catalyst layer forming step.

10. The method for producing an exhaust gas purifying catalyst according to claim 6,
    wherein:

    the first catalyst slurry is supplied into the wall flow type substrate from the exhaust gas outflow-side end in the first catalyst layer forming step; and
    the second catalyst slurry is supplied into the wall flow type substrate from the exhaust gas inflow-side end in the second catalyst layer forming step.

11. The method for producing an exhaust gas purifying catalyst according to any one of claims 6 to 10, wherein the second catalyst slurry contains Pd as the catalytic metal.

12. The method for producing an exhaust gas purifying catalyst according to any one of claims 6 to 11, wherein the first catalyst slurry contains Rh as the catalytic metal.

FIG. 1

FIG. 2

FIG. 3

FIG. 4

FIG. 5

FIG. 6

FIG. 7

## INTERNATIONAL SEARCH REPORT

| | International application No. |
|---|---|
| | PCT/JP2019/019429 |

### A. CLASSIFICATION OF SUBJECT MATTER

Int.Cl. B01J35/04(2006.01)i, B01D39/14(2006.01)i, B01053/94(2006.01)i,
B01J23/63(2006.01)i, B01J37/02(2006.01)i, F01N3/022(2006.01)i,
F01N3/035(2006.01)i, F01N3/28(2006.01)i

According to International Patent Classification (IPC) or to both national classification and IPC

### B. FIELDS SEARCHED

Minimum documentation searched (classification system followed by classification symbols)

Int.Cl. B01D53/73, B01D53/86-53/90, B01D53/94, B01D53/96, B01J21/00-
38/74, F01N3/00, F01N3/02, F01N3/04-3/38, F01N9/00-11/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2016/210221 A1 (BASF CORPORATION) 29 December 2016, page 3, lines 29-32, page 11, lines 6-11, example 8, fig. 6 & JP 2018-527164 A & US 2018/0178198 A1 & EP 3314101 A1 & CA 2990427 A & KR 10-2018-0011852 A & CN 107923288 A & MX 2017017147 A & BR 112017027715 A | 1-12 |
| X | WO 2015/076403 A1 (CATALER CORPORATION) 28 May 2015, paragraphs [0025], [0043]-[0046], [0055], table 1 & US 2016/0288100 A1, paragraphs [0034], [0060]-[0063], [0072], table 1 & EP 3072587 A1 & CN 105745015 A | 1-12 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 July 2019 (19.07.2019) | 30 July 2019 (30.07.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/019429

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2014-100668 A (MAZDA MOTOR CORPORATION) 05 June 2014, paragraphs [0024]-[0025], [0040]-[0045], [0047]-[0049], table 1, fig. 8, 11 (Family: none) | 1-4, 6-12 |
| X | WO 2016/133087 A1 (CATALER CORPORATION) 25 August 2016, paragraphs [0060]-[0063], [0067], table 1, fig. 1-3 & US 2018/0021767 A1, paragraphs [0102]-[0108], [0112], table 1, fig. 1-3 & EP 3254759 A1 & CN 107249736 A | 1, 3-6, 9, 11, 12 |
| X | JP 2009-285604 A (TOYOTA MOTOR CORP.) 10 December 2009, paragraphs [0017], [0032]-[0037], [0040], [0044], table 1, fig. 1 & WO 2009/144568 A1, paragraphs [0019], [0033]-[0038], [0041], table 1, fig. 1 | 1-5 |
| A | JP 2010-022918 A (N.E. CHEMCAT CORPORATION) 04 February 2010, entire text & US 2011/0047975 A1 & WO 2010/007826 A1 & EP 2301661 A1 & CN 102083530 A | 1-12 |
| A | JP 2016-528025 A (BASF CORPORATION) 15 September 2016, entire text & US 2014/0369912 A1 & WO 2014/201094 A1 & EP 3007821 A1 & CA 2914812 A & CN 105307769 A & KR 10-2016-0019490 A & MX 2015016966 A & RU 2015156808 A & BR 112015030681 A | 1-12 |

Form PCT/ISA/210 (continuation of second sheet) (January 2015)

**REFERENCES CITED IN THE DESCRIPTION**

**Patent documents cited in the description**

- WO 2016060048 A
- WO 2016060049 A

- WO 2016060050 A